Europäisches Patentamt

European Patent Office

Office européen des brevets

(11) Publication number: **0 275 837**
**A2**

## EUROPEAN PATENT APPLICATION

(21) Application number: **87830408.8**

(22) Date of filing: **13.11.87**

(51) Int. Cl.⁴: **A23G 1/18**

The title of the invention has been amended (Guidelines for Examination in the EPO, A-III, 7.3).

(30) Priority: **27.11.86 IT 5414086 U**

(43) Date of publication of application:
**27.07.88 Bulletin 88/30**

(84) Designated Contracting States:
**AT BE CH DE ES FR GB GR IT LI LU NL SE**

(71) Applicant: **Roncarolo, Pier Maria**
**Via Delleani, 7**
**I-10141 Torino(IT)**

(72) Inventor: **Roncarolo, Pier Maria**
**Via Delleani, 7**
**I-10141 Torino(IT)**

(74) Representative: **Buzzi, Franco et al**
**c/o Jacobacci-Casetta & Perani S.p.A. Via Alfieri, 17**
**I-10121 Torino(IT)**

(54) **Machine for the continuous tempering of chocolate.**

(57) A machine for continuous tempering and/or re-tempering of chocolate comprises a pumping unit (10) which supplies the chocolate from a collecting tank (3) to a duct (6) having at least two successive thermo regulation stages including respective restricted portions (17, 34) through which the chocolate is forced and which extend through respective thermoregulating elements (13, 33) provided with passages (14, 35; 15, 36) for circulation of a thermoregulating liquid. The first thermoregulating element (13) is connected in a circuit (11) for heating the thermoregulating liquid to heat the chocolate to a predetermined temperature, and the second thermoregulating element (33) is connected in a circuit (12) for cooling the thermoregulating liquid by means of which the chocolate is subsequently cooled to its tempering point.

EP 0 275 837 A2

FIG. 1

# A machine for continuous tempering and/or re-tempering of chocolate

The present invention relates generally to the tempering of chocolate and has the object of producing an automatic continuous-cycle tempering and/or re-tempering machine which is simple to produce, functional and relatively economical in view of its intended use in workshops or even in industry.

The chocolate tempering and/or re-tempering machine according to the invention is characterised in that it includes a pumping unit which supplies the chocolate from a collecting tank to a duct having at least two successive thermoregulation stages including respective restricted passage portions through which the chocolate is forced under pressure and which extend through respective thermoregulating elements provided with passages for the circulation of a thermoregulating liquid; the first thermoregulating element being connected in a circuit for heating the thermoregulating liquid to heat the chocolate to a predetermined temperature, and the second thermoregulating element being connected in a circuit for cooling the thermoregulating liquid by means of which the chocolate is subsequently cooled to its tempering point.

In a preferred embodiment, the machine according to the invention comprises a support structure the top of which forms the collecting tank whose bottom communicates with the duct for passage of the chocolate, in which the pumping unit is inserted, the duct having a horizontal portion and a vertical portion extending respectively through first and second thermoregulating elements each of which has a central passage and a peripheral passage arranged on opposite sides of the corresponding portion of the chocolate duct, for the circulation of the thermoregulating liquid; the circuit for heating the thermoregulating liquid, in which the first thermoregulating element is connected, including a cavity associated with the tank, and the vertical portion of the duct for passage of the chocolate ending at the top of the second thermoregulating element in a chocolate pouring hole situated above the tank.

Preferably, the horizontal and vertical portions of the duct for passage of the chocolate are annular, the central passages for the thermoregulating liquid extend coaxially inside the annular portions, and the peripheral passages for the thermoregulating liquid are annular and surround the annular portions externally.

The annular portions of the duct for passage of the chocolate conveniently contain spiral elements for producing a helical flow of chocolate.

The invention will now be described in detail with reference to the appended drawings, provided purely by way of non-limiting example, in which:

Figure 1 is a partially sectioned perspective view of a tempering and/or or re-tempering machine according to the invention,

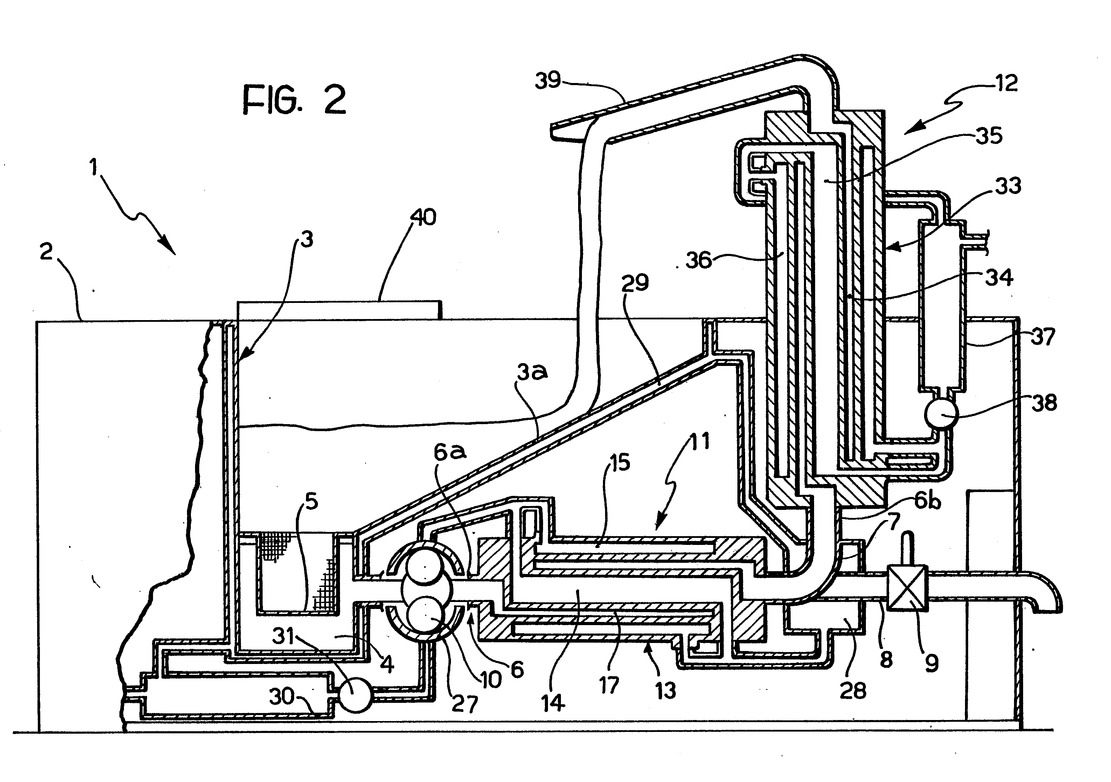

Figure 2 is a diagrammatic view which shows the operational layout of the machine in a simplified form,

Figure 3 is a section taken on the line III-III of Figure 1 on an enlarged scale, and

Figure 4 is a perspective view of a detail of Figure 3.

With reference to the drawings, an automatic continuous-cycle machine intended for use in workshops or in industry for tempering and/or re-tempering chocolate is generally indicated 1.

The machine 1 comprises essentially a support structure 2 in the shape of a cabinet whose top defines a collecting tank 3 with an inclined hopper-like bottom 3a ending in a sump 4 in which a filtering element 5 is inserted.

The sump 4 communicates at the side with a duct, generally indicated 6, which has a horizontal portion 6a and a vertical portion 6b connected to the horizontal portion 6a through a two-way connector 7. This connector 7 communicates with an outlet duct 8 which extends horizontally as an extension of the section 6a of the duct 6 and in which a manually operated discharge valve 9 is inserted.

A calibratable, geared positive-displacement pump 10 is arranged at the start of the horizontal section 6a of the duct 6 for sending the chocolate from the sump 4 to the duct 6 in use.

The horizontal section 6a and the vertical section 6b of the duct 6 are inserted respectively in a heating circuit, generally indicated 11, and a cooling circuit, generally indicated 12, through which a thermoregulating liquid, normally water, circulates.

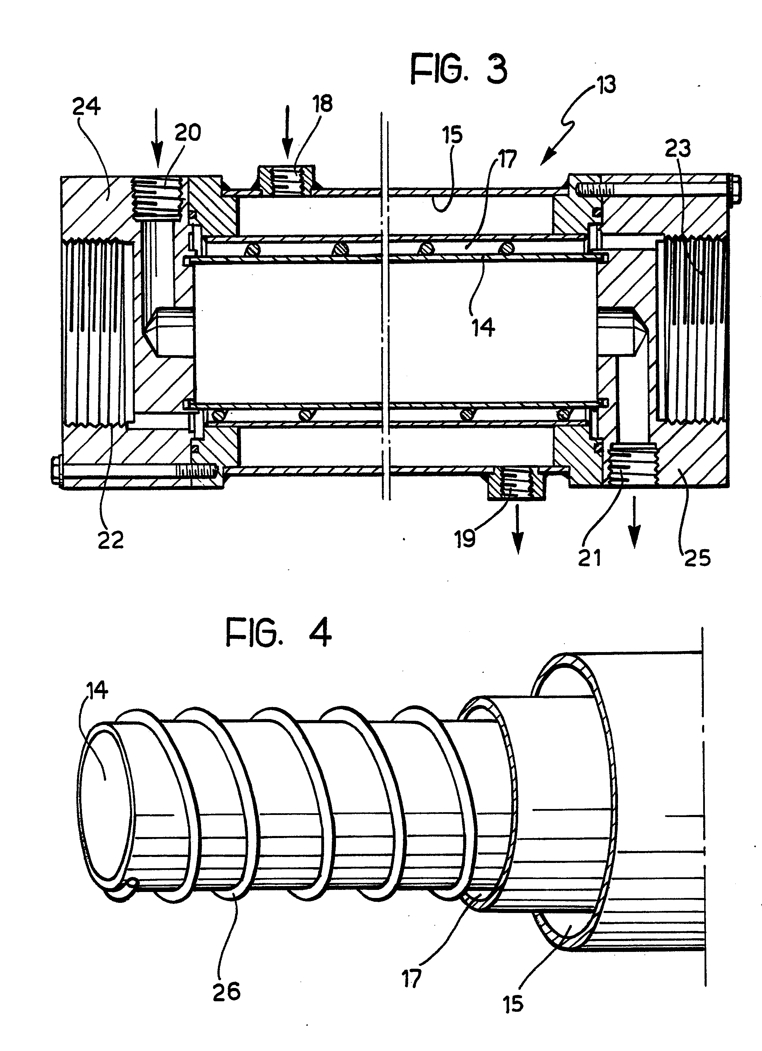

The heating circuit 11 includes a thermoregulating cylinder 13, shown in greater detail in Figure 3, comprising a central axial passage 14 and a peripheral annular passage 15, between which an annular restricted portion 17 of the horizontal portion 6a of the duct 6 extends coaxially. Purely by way of example, with a thermoregulating cylinder 13 having a length of the order of 40cm and an outside diameter of the order of 85-90mm, the radius of the annular section of the passage 17 is conveniently between 3 and 6mm, preferably 4mm, while the radius of the annular section of the peripheral passage 15 is of the order of 12mm and that of the central passage 14 is of the order of 21mm.

The outer passage 15 communicates with the heating circuit 11 through an inlet connector 18 and an outlet connector 19 projecting radially from the side wall of the thermoregulating cylinder 13.

The annular passage 17 and the central passage 14, on the other hand, communicate with the duct 6 and the heating circuit 11 respectively by means of respective radial inlet and outlet connectors 20, 21 and respective axial inlet and outlet connectors 22, 23 formed in two end bases 24, 25 of the thermoregulating cylinder 13.

As shown in detail in Figure 4, a spiral member 26 is applied to the outer wall of the duct 14 forming the inner wall of the passage 17, the function of which, as will be seen below, is to impart a helical movement to the chocolate flowing through this passage 17.

Elements, not illustrated, for breaking up the flow of the thermoregulating water and making it turbulent may also be inserted in the passages 14 and 15.

As well as the passages 14 and 15, the heating circuit 11 comprises a cavity 27 surrounding the body of the pump 10, a cavity 28 surrounding the two-way connector 7, a cavity 29 adjacent the wall of the tank 3 and the sump 4, a heat exchanger 30, and a circulation pump 31 by means of which the thermoregulating water coming from the exchanger 30 is circulated through the heating circuit 11.

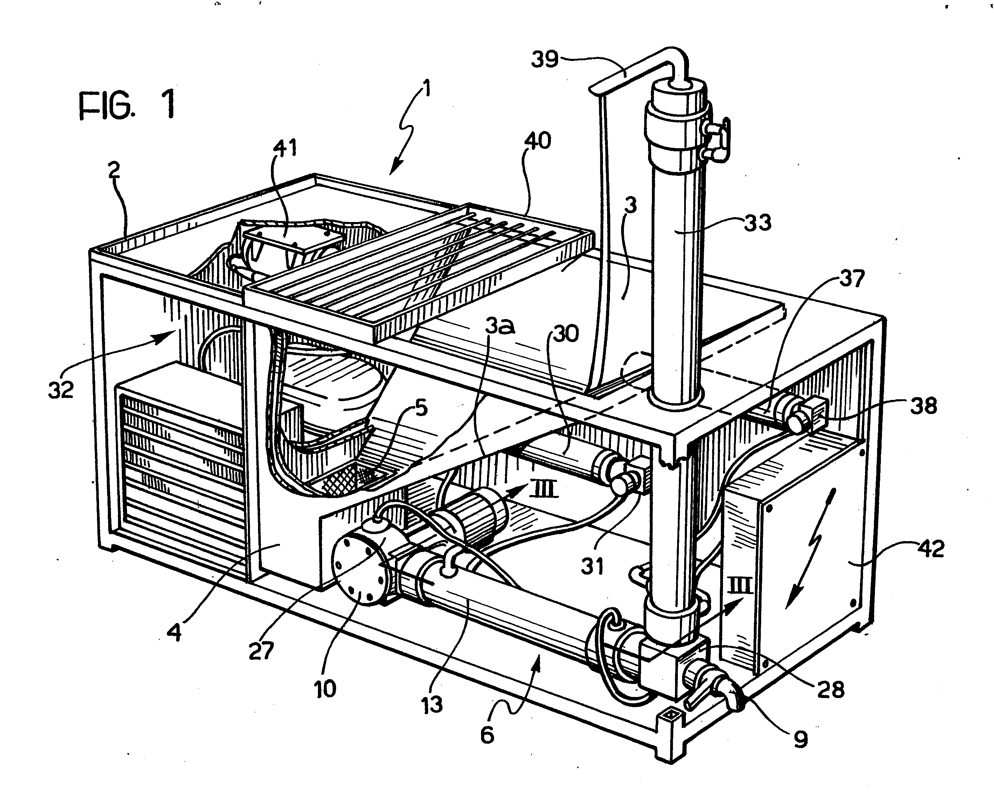

The regulation of the water temperature occurs in the heat exchanger 30 and is achieved by means of a conventional refrigerating unit or a device with electrical resistors, generally indicated 32 in Figure 1, housed within the cabinet 2 beside the tank 3.

The cooling circuit 12 comprises a vertical thermoregulating cylinder 33 which is exactly the same as the thermoregulating cylinder 13, except for a greater axial dimension, for example, of the order of 1 meter. This thermoregulating cylinder 33 includes an annular restricted section 34 of the vertical portion 6b of the duct 6, interposed coaxially between an axial passage 35 and an annular peripheral passage 36 through which a thermoregulating liquid, normally water, circulates. The passages 35 and 36 communicate with the cooling circuit 12 through respective tubular connectors, not illustrated but exactly the same as those described with reference to the thermoregulating cylinder 13, for circulating the thermoregulating water through a heat exchanger 37 by means of a pump 38. Regulation of the water temperature through the exchanger 37 is again achieved by means of the unit 32.

As can be seen in Figure 1, the upper part of the thermoregulating cylinder 33 extends above the cabinet 2 and carries at its top an orientable pouring hole 39 which projects over the tank 3 and communicates with the annular chocolate duct 34.

A support platform with horizontal bars, indicated 40, is arranged over the tank 3 on the side opposite the pouring hole 38 and is operatively associated with a motorized vibrator unit 41 of known type.

The pumps 10, 31, 38 and the refrigerating unit 32 are connected to a control unit, generally indicated 42, which is connected to temperature sensors, not illustrated, inserted in the heating circuit 11 and the cooling circuit 12. The unit 42 is arranged to achieve a continuous automatic cycle of tempering and/or re-tempering of the chocolate.

In operation, the mass of chocolate which reaches the sump 4 of the tank 3 is supplied from time to time to the duct 6 by means of the pump 10, passing initially through the thermoregulating cylinder 13 of the heating circuit 11 and subsequently through the thermoregulating cylinder 33 of the cooling circuit 12. The chocolate is forced by the pump 10 through the restricted passage 7 and subsequently through the restricted passage 34, effectively causing the greasy substances (butter) to be separated from the dry parts. At the same time, the pumps 31 and 38 keep the thermoregulating water circulating in the heating circuit 11 and the cooling circuit 12 respectively.

The thermoregulating water of the heating circuit 11 is heated to between 35 and 40°C in the heat exchanger 30, so as to raise the temperature of the chocolate in the thermoregulating cylinder 13 to a predetermined value. The chocolate is then cooled by the thermoregulating water of the circuit 12 to the required tempering point, as it passes through the thermoregulating cylinder 33.

The chocolate thus reaches the pouring hole 39 and can be put into normal forming moulds which are subsequently placed on the vibrating support platform 40 for the removal of air bubbles trapped therein.

The chocolate not used for filling the moulds and any which drips from the moulds onto the vibrating platform 40 returns to the the tank 3 and is recirculated through the duct 6.

It will be clear from the above that the machine according to the invention has a relatively simple and economical structure which makes it particularly suitable for use in workshops and capable of ensuring high operational efficiency. In particular, the structure of the thermoregulating cylinders 13 and 33, and above all the restricted shape of the annular passages 17 and 34 and the presence in these passages of the spiral elements 26, together with the forcing effect exerted by the pump 10, enables the chocolate output by the pouring hole 39 of the machine to be obtained in the optimum condition for use. With moulding tempertures which are lower by several degrees centigrade than the prior art and the liquidity characteristics of the chocolate being constant, the details of contruction of the machine may be varied with respect to those described and illustrated whilst remaining within the scope of the present invention.

Thus, for example, it should be noted that, in an initial operating stage of the machine, the heating circuit 11 could be used as a cooler for the mass of chocolate placed in the tank 3 after it has been previously melted at a temperature, for example, of the order of 50°C.

Furthermore, the portions 17 and 34 of the chocolate duct 6 could be arranged in different configurations and orientations from those described and illustrated and, instead of an annular shape, could have a flattened profile and lengths differing from those described. It is clear that, in this case, the passages 14, 35 and 15, 36 would also have a corresponding flat profile and would obviously be arranged on opposite sides of the respective portions 17 and 34. Furthermore, although the machine is designed particularly for use in workshops, it could also be used to advantage on an industrial scale, obviously with suitable dimensions. In particular, the length of the thermoregulating cylinders 13, 33 would, in this case, be appreciably larger than those described above and a third thermoregulation stage with a further supplementary thermoregulating cylinder could be provided to make the cycle of continuous tempering (continuous tempering machine) or re-tempering more effective by means of a final stabilisation of the temperature of the chocolate.

## Claims

1. A machine for continuous tempering and/or re-tempering of chocolate, characterised in that it comprises a pumping unit (10) which supplies the chocolate from a collecting tank (3) to a duct (6) having at least two successive thermoregulation stages including respective restricted passage portions (17, 34) through which the chocolate is forced under pressure and which extend through respective thermoregulating elements (13, 33) provided with passages (14, 35; 15, 36) for the circulation of a thermoregulating liquid; the first thermoregulating element (13) being connected in a circuit (11) for heating the thermoregulating liquid to heat the chocolate to a predetermined temperature, and the second thermoregulating element (33) being connected in a circuit (12) for cooling the thermoregulating liquid by means of which the chocolate is subsequently cooled to its tempering point.

2. A machine according to Claim 1, characterised in that it comprises a support structure (2) the top of which forms the collecting tank (3) whose bottom (4) communicates with the duct (6) for passage of the chocolate, in which the pumping unit (10) is inserted, the duct (6) having a horizontal portion (17) and a vertical portion (34) extending respectively through first and second thermoregulating elements (13, 33) each of which is provided with a central passage (14, 35) and a peripheral passage (15, 36) arranged on opposite sides of the corresponding portion (17, 34) of the chocolate duct (6), for circulation of the thermoregulating liquid; the circuit (11) for heating the thermoregulating liquid, in which the first thermoregulating element is connected, including a cavity (29) associated with the tank (3), and the vertical portion (34) of the chocolate duct (6) ending at the top of the second thermoregulating element (33) in a chocolate pouring hole (39) situated above the tank (3).

3. A machine according to Claim 1, characterised in that the horizontal (17) and vertical (34) restricted portions of the duct (6) for passage of the chocolate are annular, the central passages (14, 35) for the thermoregulating liquid extend coaxially inside the annular portions (17, 34), and the peripheral passages (15, 36) for the thermoregulating liquid are annular and surround the annular positions (17, 34) externally.

4. A machine according to Claim 2, characterised in that the heating (11) and cooling (12) circuits include respective heat exchangers (30, 37) through which the thermoregulating liquid flows and which are connected to a refrigerating unit with a motor-driven compressor and to a device (32) with a electrical resistors.

5. A machine according to Claim 2, characterised in that the annular portions (17, 34) of the duct (6) for passage of the chocolate contain spiral elements (26) for producing a helical flow of chocolate.

6. A machine according to one or more of the preceding claims, characterised in that a filtering element (5) is arranged between the bottom (4) of the tank (3) and the duct (6) for passage of the chocolate.

7. A machine according to one or more of the preceding claims, characterised in that the pumping unit is constituted by a geared positive-displacement pump.

8. A machine according to any one of the preceding claims, characterised in that it includes a third stage of final stabilisation of the temperature of the chocolate.

FIG. 1

0 275 837

FIG. 2

# FIG. 3

# FIG. 4